Europäisches Patentamt

European Patent Office

Office européen des brevets

(11) Publication number: **0 469 546 A2**

## EUROPEAN PATENT APPLICATION

(21) Application number: **91112794.2**

(22) Date of filing: **30.07.91**

(51) Int. Cl.⁵: **H04M 1/274**, H04M 1/72

(30) Priority: **30.07.90 JP 201633/90**

(43) Date of publication of application:
**05.02.92 Bulletin 92/06**

(84) Designated Contracting States:
**DE FR GB NL SE**

(71) Applicant: **NEC CORPORATION**
**7-1, Shiba 5-chome Minato-ku**
**Tokyo 108-01(JP)**

(72) Inventor: **Tamura, Yoshiharu, c/o NEC**
**Corporation**
**7-1, Shiba 5-chome, Minato-ku**
**Tokyo(JP)**

(74) Representative: **Vossius & Partner**
**Siebertstrasse 4 P.O. Box 86 07 67**
**W-8000 München 86(DE)**

(54) **Portable telephone set comprising input keys and a shift key on different surfaces.**

(57) On storing characters representative of destination names in a memory (26) of a portable telephone set by press down of input keys (16), a shift key (23) is put in one and the other of operated and non-operated states if the characters of a first group, such as lowercase letters, and the characters of a second group, such as capital letters, should be used. The input and the shift keys are arranged on different surfaces of the telephone set so that the input keys can be pressed by a finger of, for example, the right hand with the telephone set held by the left hand and the shift keys manipulated by a finger of the left hand. The memory can be accessed by abbreviated telephone codes and can memorize the abbreviated telephone codes and corresponding full telephone numbers in addition to the destination names for display.

FIG. 3

## Background of the Invention:

This invention relates to a portable telephone set capable of dialling to other telephone sets by abbreviated dialling or speed dialling.

A conventional portable telephone set has an operating surface and comprises an abbreviated dial or dialling memory for memorizing telephone numbers of the other telephone sets as memorized numbers. The memory always memorizes abbreviated telephone codes as memorized codes in correspondence to the respective telephone numbers, and a plurality of characters as memorized names, which characters are for representing destination names, such as personal names and names of corporations, of subscribers of the other telephone sets. Input keys are arranged on the operating surface and are used in storing or input of the telephone numbers, the abbreviated telephone codes, and the above-mentioned plurality of characters representative of the destination names in the memory and in dialling a selected one of the memorized codes. The input keys are usually twelve in number. Ten keys of the input keys are used for the storage and for the abbreviated dialling. Under the circumstances, the characters may be either capital letters or lowercase letters. It has therefore been impossible with the conventional portable telephone set to represent the destination names by a mixed use of capital and lowercase letters.

It is known that such a conventional portable telephone set may comprise at least one function key on the operating surface for use in making the ten keys store the destination names either only by capital letters or by the mixed use of capital and lowercase letters. Inasmuch as the function key is arranged on the operating surface on which the input keys are also arranged, it has been troublesome to simultaneously use the input keys and the function key.

Alternatively, the destination names are stored in the abbreviated dial memory by successively scrolling either the capital letters or the capital and the lowercase letters. On storing each letter, such letters must be scrolled. Storing of the destination names has therefore been time-consuming.

## Summary of the Invention:

It is therefore an object of the present invention to provide a portable telephone set which is readily and conveniently operable on storing destination names in an abbreviate dial memory by characters of first and second groups which are typically lowercase letters and capital letters.

Other objects of this invention will become clear as the description proceeds.

According to this invention, there is provided a portable telephone set for dialling to other telephone sets by abbreviated dialling, wherein (A) the portable telephone set has an operating surface and a side surface which is substantially perpendicular to the operating surface; which portable telephone set comprising: (B) an abbreviated dial memory for memorizing telephone numbers of the other telephone sets and abbreviated telephone codes corresponding to the telephone numbers as memorized numbers and memorized codes; (C) input keys arranged on the operating surface for storing in the memory a plurality of characters representative of destination names as memorized names, which destination names are related to the telephone numbers, which characters are classified into first and second groups; and (C) a shift key arranged on the side surface and coupled to the input keys and having an operated and a nonoperated state for allowing the input keys to store the characters of the first and the second groups in the memory as the memorized names when the shift key is put in one and the other of the operated and the nonoperated states, respectively.

## Brief Description of the Drawing:

Fig. 1 is a schematic perspective view of a portable telephone set according to an embodiment of the instant invention;

Fig. 2 is an enlarged partial front view of the portable telephone set illustrated in Fig. 1;

Fig. 3 is a block diagram of circuitry used in the portable telephone set depicted in Fig. 1;

Fig. 4 is a partial front view of the portable telephone set illustrated in Fig. 1 and is for showing a manner of using the portable telephone set;

Fig. 5 is another partial front view of the portable telephone set depicted in Fig. 1 and is for showing another manner of using the portable telephone set; and

Fig. 6 is a flow chart for use in describing how to use the portable telephone set shown in Fig. 1.

## Description of the Preferred Embodiment:

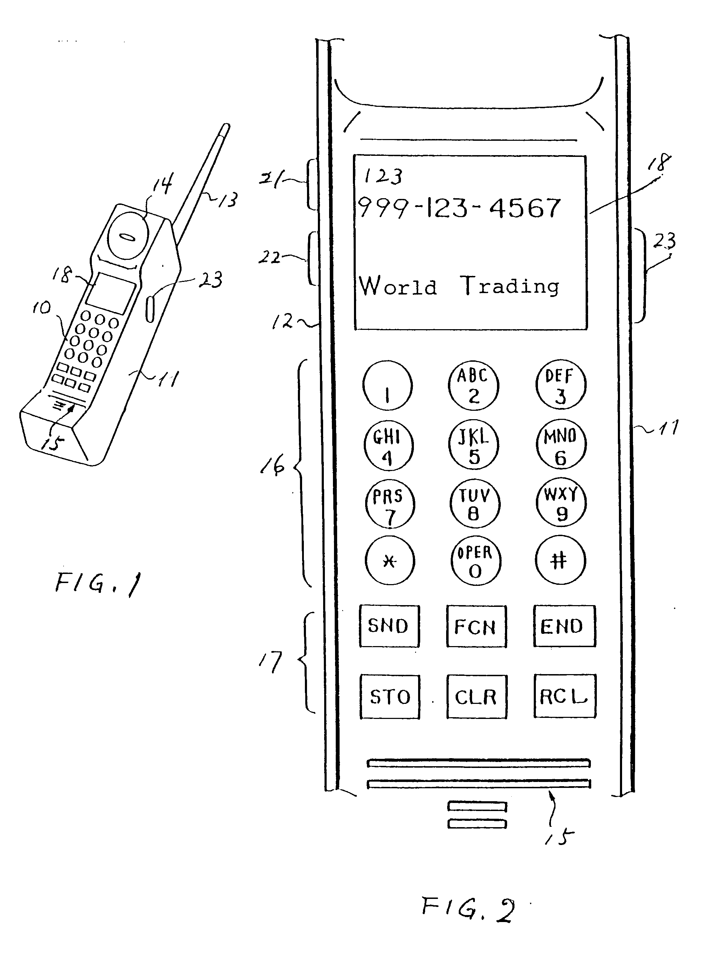

Referring to Fig. 1, a portable telephone set is according to a preferred embodiment of the present invention. By using the portable telephone set, a subscriber can exchange conversation with another subscriber of a particular one of other telephone sets (not shown). On origination of a call from the portable telephone set, the subscriber dials to the particular one of the other telephone set typically by abbreviated dialling.

The portable telephone set is not much different in outline from a conventional telephone set of the type described and comprises a casing having an operating or front surface 10 and first and second side surfaces 11 (Figs. 1 and 2) and 12 (Fig. 2). The operating surface 10 is substantially planar. Each of the side surfaces 11 and 12 is substantially perpendicular to the operating surface 10.

As usual, the portable telephone set comprises an antenna rod 13 extended outwardly of (or from) the casing, a receiver 14 mainly inwardly of (or inside) the casing, and a microphone which is placed in the casing. A plurality of openings 15 are formed through the operating surface 10 for use in transmitting speaker's voice to the microphone. Inasmuch as the antenna rod 13, the receiver 14, and the microphone are out of scope of this invention, details will not further be described.

Referring additionally to Fig. 2, the portable telephone set comprises input keys 16 arranged as a key matrix on the operating surface 10 and function keys 17 which are similarly arranged on the operating surface 10. In Fig. 2, a pair of side protrusions is formed on the operating surface.

In the example being illustrated, the input keys 16 are twelve in number like well-known push buttons used in multifrequency dialling. The function keys 17 are six in number. Ten keys among the input keys 16 are primarily for dialling to the particular one of the other telephone sets usually by a selected one of abbreviated telephone codes which correspond to telephone numbers assigned to respective ones of the other telephone sets. Such ten keys will be referred to as keys "0" to "9" according to allotment of the ten keys to ten numerals 0 through 9.

In the manner which will presently be illustrated, the portable telephone set comprises an abbreviated dial memory inwardly of (or inside) the casing. The memory is for memorizing the telephone numbers as memorized numbers, the abbreviated telephone codes as memorized codes, and destination names as memorized names. As herein called, the destination names are personal names and names of corporations of the subscribers of the other telephone sets. In this manner, the destination names are related to the telephone numbers. Combinations of characters of first and second groups are used to represent the destination names and are memorized in the memory as the memorized names. The characters of the first group are, for example, lowercase letters and numerals and may comprise a hyphen, an apostrophe, and other punctuation marks and a space between two consecutive words. In this event, the characters of the second group are capital letters. Depending on the circumstances, some of the punctuation marks may be included in the characters of the second group.

In addition to for use in the abbreviated dialling, the input keys 16 are used on storing the telephone numbers, the abbreviated telephone codes, and the characters representative of the destination names in the abbreviated dial memory. Some of the function keys 17, such as an end key END, a store key STO, and a clear key CLR are used on carrying out storage in the memory in the manner which will later be described.

A display unit is positioned in the casing as will shortly be described and has a display panel 18 on the operating surface 10. Up and down keys 21 and 22 are arranged on the second side surface 12. These keys 21 and 22 are primarily for adjusting a sound volume produced by the receiver 14. In accordance with this invention, a shift or switching key 23 is arranged on the first side surface 11 and has an operated and a nonoperated state for use during the storage in the manner which will become clear as the description proceeds.

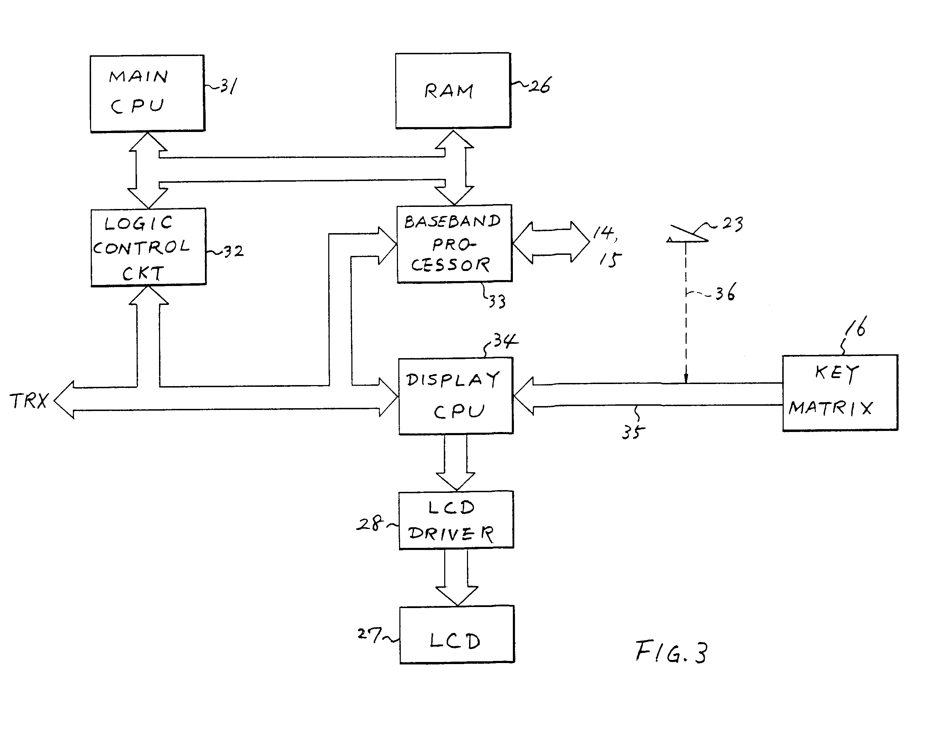

Turning to Fig. 3 with Figs. 1 and 2 referred to, the portable telephone set comprises electric circuitry within the casing. The abbreviated dial memory is depicted at 26 as a random-access memory (RAM) accessible by the abbreviated telephone codes. The display unit is illustrated as a liquid crystal display (LCD) 27 which is driven by a liquid crystal display driver 28. The input keys are shown as the key matrix with the reference numeral 16 used. The shift key 23 is illustrated as an on-off contact.

In the electric circuitry, a main central processing unit (CPU) 31 is connected to the random access memory 26, a logic control circuit 32, and a baseband signal processor 33. The logic control circuit 32 is connected to a transmitter and a receiver circuit which are collectively represented by TRX and encased in the casing. Exchanging information to and from the main central processing unit 31, the logic control circuit 32 serves as an input-output device, a clock frequency divider, a digital-to-analog converter, an analog-to-digital converter, and the like in the manner known in the art. Exchanging information to and from the random-access memory 26, the main central processing unit 31, and the logic control circuit 32, the baseband signal processor 33 primarily processes its input signal from the receiver circuit into a reception audio signal for supply to the receiver 14 and a transmission audio signal into its output signal for supply to the transmitter when supplied with the transmission audio signal from the microphone which is herein indicated by the reference numeral 15 merely for convenience of illustration.

A display central processing unit 34 is connected from the key matrix 16 through a bus 35, to and from the transmitter and receiver circuit TRX, the logic control circuit 32, and the baseband signal processor 33, and to the liquid crystal display driver 28. In the illustrated example, the shift key 23 is connected to the bus 35 in the manner depicted by a dashed control line 36. Depending on the circumstances, it is convenient to understand that the shift key 23 is coupled directly to the key matrix 16.

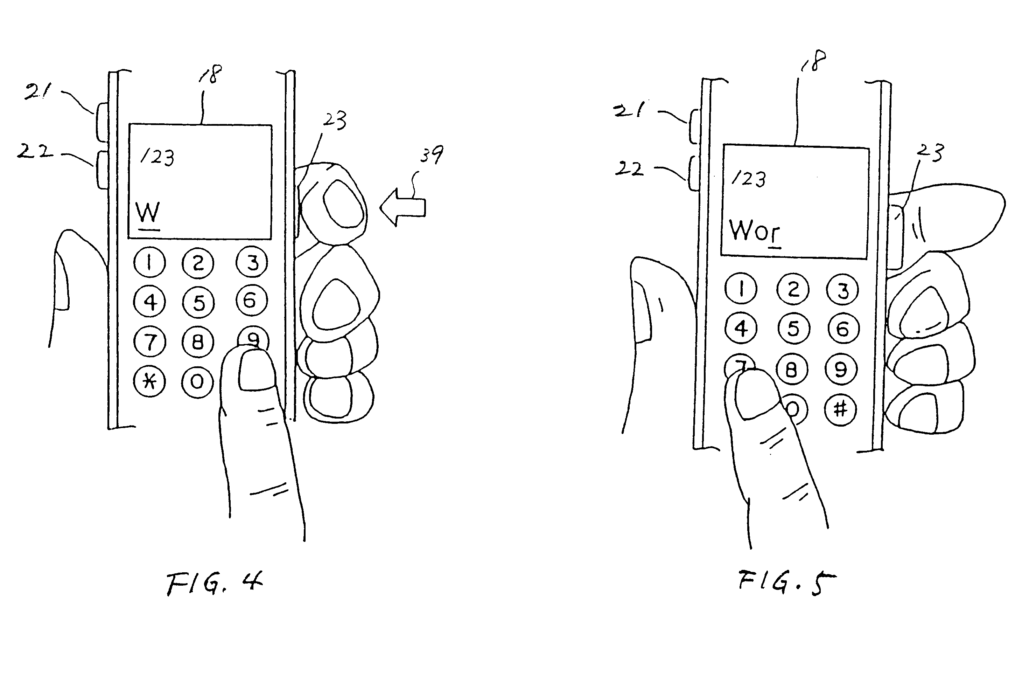

Referring to Figs. 4 and 5, it will be assumed that the portable telephone set is held by the left hand. In Fig. 4, the shift key 23 is pressed down by the index finger of the left hand in the manner symbolically indicated by an arrow 39. In Fig. 5, the index finger is removed from the shift key 23 to release the shift key 23 back to its normal state. It is possible to understand without loss of generality that the shift key 23 is put in the operated and the nonoperated states when pressed down and released, respectively.

In each of Figs. 4 and 5, the index finger of the right hand is used in pressing down a selected one of the input keys 16 at a time on storing a new destination name by at least one of the characters of either the first and the second groups or the second group alone in the abbreviated dial memory or random-access memory 26 (Fig. 3) as one of the memorized names. It is presumed that a particular one of the memorized codes is already displayed on the display panel 18 as "123" by successive press down of the keys "1" to "3" and that the store key STO is touched to make the memory 26 memorize the new destination name.

It should be understood in connection with the above that the input keys 16 are used to indicate the numeral or numerals when merely pressed down. The input keys 16 are used to indicate the characters when pressed down after a predetermined one of the input and the function keys 16 and 17 is once touched either before or after press down of the store key STO.

In the example illustrated in Fig. 2, a letter "W" is assigned to the key "9" as a first letter of three letters WXY. Another letter "R" is assigned to the key "7" as a second letter of other three letters PRS.

In Fig. 4, a capital letter "W" is stored in the random-access memory 26 together with display on the display panel 18 when the key "9" is pressed down while the shift key 23 is put in the operated state. A horizontal cursor line automatically appears on the display panel 18 in the known manner preliminarily before the letter "W" is displayed thereon.

In Fig. 5, a lowercase letter "r" is stored in the memory 26 following storage of the capital letter "W" and a lowercase letter "o" when the key "7" is pressed down while the shift key 23 is left released. Inasmuch as the letter "R" is the second letter, the three letters PRS are scrolled from the letter "P" to the letter "R" either by once pressing down one of the up and the down keys 21 and 22 or twice pressing down the key "7". When memorized in the memory 26 as a part of one of the memorized names, the lowercase letter "r" is displayed above the horizontal cursor line which automatically moves to a position depicted in Fig. 5 in the known manner.

It is now understood that the shift key 23 allows the input keys 16 to store the characters of the first and the second groups in the abbreviated dial memory 26 as the memorized names when the shift key 23 is put in one and the other of the operated and the nonoperated states. While the input keys 16 are touched by a finger of one of the right and the left hands, the shift key 23 is unexpectedly conveniently pressed down and released by a finger of the other one of the right and the left hands that is used in holding the portable telephone set.

In a like manner, it is possible to store in the random-access memory 26 a new abbreviated telephone code as one of the memorized codes and a new telephone number as one of the memorized numbers together with the new destination name. When stored, the new abbreviated telephone code, the new telephone number, and the new destination name are displayed on the display panel 18 in the manner exemplified in Fig. 2.

Referring more particularly to Fig. 3, it is possible to merely display a selected one of the memorized codes, a corresponding one of the memorized numbers, and a related one of the memorized names by the liquid crystal display 27 in the manner exemplified in Fig. 2. In this event, the input keys 16 are used in dialling the selected one of the memorized codes. Through the bus 35, the display central processing unit 34 drives the liquid crystal display driver 28 to make the liquid crystal display 27 display the selected one of the memorized codes.

Through the bus 35, the display central processing unit 34, and the logic control circuit 32, the main central processing unit 31 accesses to the random-access memory 26 by the selected one of the memorized codes. Accessed in this manner, the random-access memory 26 delivers signals representative of the corresponding one of the memorized numbers and the related one of the memorized names to the display central processing unit 34 through the logic control circuit 32. The display central processing unit 34 drives the liquid crystal display driver 28 to make the liquid crystal display 27 display the corresponding one of the memorized numbers and the related one of the memorized names in addition to the selected one of the memorized codes.

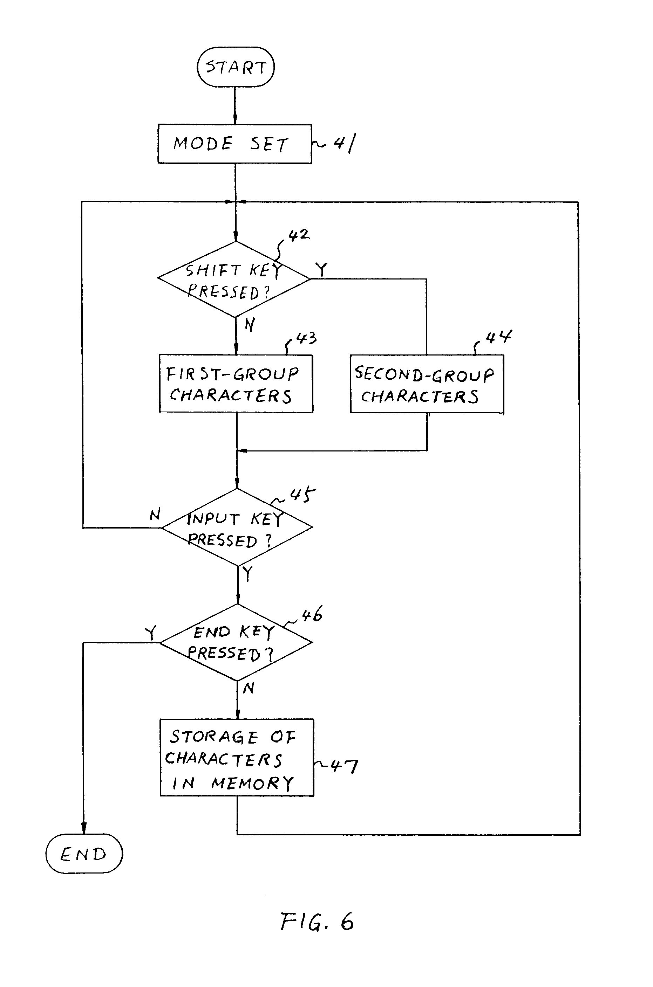

Turning to Fig. 6 with Fig. 3 referred to, a memory storage mode of operation of the electric circuitry begins when the store key STO is once pressed down among the function keys 17 at a first step 41. Through the control line 36, the bus 35, the display central processing unit 34, and the logic control circuit 32, the main central processing unit 31 judges at a second step 42 whether or not the shift key 23 is pressed down. If the shift key 23 is not pressed down, the main central processing unit 31 selects at a third step 43 the characters of the first group for storage in the random-access memory 26. If the shift key 23 is pressed down, the main central processing unit 31 selects at a fourth step 44 the characters of the second group for the storage.

When the input keys 16 are pressed down, the main central processing unit 31 judges through the bus 35, the display central processing unit 34, and the logic control circuit 32 at a fifth step 45 which of the input keys 16 is pressed down. If none of the input keys 16 is pressed down, the fifth step 45 returns to the second step 42. When at least one of the input keys 16 is pressed down, the fifth step 45 proceeds to a sixth step 46.

At the sixth step 46, the main central processing unit 31 judges whether or not the end key END is pressed down among the function keys It. It should be understood in this connection that the function keys 17 are included in the key matrix 16. Information of press down of the end key END is therefore transmitted to the main central processing unit 31 from the key matrix 16 through the bus 35, the display central processing unit 34, and the logic control circuit 32.

If the end key END is pressed down, the memory storage mode of operation comes to an end. If the end key END is not yet pressed down, the main central processing unit 31 stores at a seventh step 47 at least one of the characters of the first and the second groups that is indicated by the input key or keys 16 pressed down at the fifth step 45. Storage of the characters of the first and the second groups is already selected at the third and the fourth steps 43 and 44. Indication of the at least one of the characters is already judged at the fifth step 45. After completion of storage of the new destination name in the random-access memory 26, the seventh step 47 returns to the second step 42. The new destination name may therefore be stored in the memory 26 character by character.

It may be assumed that the new abbreviated telephone code and the new telephone number are stored in the random-access memory 26 as the selected one of the memorized codes and the corresponding one of the memorized numbers immediately before storage of the new destination name in the memory 26 as the selected one of the memorized names. Under the circumstances, the main central processing unit 31 makes the memory 26 deliver at the seventh step 47 signals representative of the corresponding one of the memorized numbers and the selected one of the memorized names to the display central processing unit 32 for display of the corresponding one of the memorized numbers and the related one of the memorized names on the liquid crystal display 27 in the manner described above in relation to the mere display.

When it is felt that an erroneous one of the input keys 16, the function keys 17, and the shift key 23 is pressed down by mistake, it is possible to remove the mistake by pressing down the clear key CLR among the function keys 17. In this event, the main central processing unit 31 detects the mistake in the manner described as regards the end key END. The main central processing unit 31 is capable of cancelling operation of the erroneous key.

Reviewing Figs. 2 and 3, it is possible to store the new destination name in the random-access memory 26 by scrolling the letters of alphabet with one of the up and the down keys 21 and 22, the input keys 16, and the function keys 17 put intermittently into operation. Each of the letters of the alphabet should be displayed on the display panel 18 during the intermittent scroll by accordingly modifying the electric circuitry. When a desired one of the letters is displayed on the display panel 18, the intermittent scroll is suspended. The desired letter is stored in the memory 26 by pressing down, for example, the store key STO with the lowercase letter and the capital letter selected by the shift key 23. It is possible to display the selected one of the memorized codes, the corresponding one of the memorized numbers, and the related one of the memorized names either when the selected one of the memorized codes is dialled by the input keys 16 upon origination of a call or when a call arrives at the portable telephone set from one of the other telephone sets that is assigned with the corresponding one of the memorized numbers.

It may be mentioned here that a mute key is arranged on the first surface 11 in each of some conventional portable telephone sets. When pressed down, the mute key disables either transmission of the speaker's voice to the particular one of the other telephone sets or reception of the audio signal sent back from the particular one of the other telephone sets. In such an event, it is possible to use the mute key as the shift key 23, after the store key STO is once touched, in order to store the new abbreviated telephone code, the new telephone number, and the new destination name by the characters of the first and the second groups in the abbreviated dial memory 26. The shift key 23 is used as the mute key after the end key END is touched.

It is now understood that the shift key 23 enables storage of the characters of the first and the second groups in the abbreviated dial memory 26 as the memorized names although it may appear at a first glance that the shift key 23 is similar to the mute key. Furthermore, the shift key 23 is readily used by those who we acquainted with operation of keyboard machines which may be, for example, a word processor.

While this invention has thus far been described in specific conjunction with a sole preferred embodiment thereof and a few modifications, it will now be readily possible for one skilled in the art to put this invention into practice in various other manners. For example, it is possible to place the shift key 23 on the second side surface 12 rather than on the first side surface. Such a portable telephone set will be very convenient for one who wishes to hold the telephone set by his right hand while using his left hand in selectively pressing down the input keys 16 and the function keys 17. Alternatively, two shift keys may be arranged on both side surfaces 11 and 12 for selective activation of the two shift keys as by a predetermined one of the input keys 16 and the function keys 17. The portable telephone set may further comprise a loudspeaker (not shown) for use in place of the receiver 14.

## Claims

1. A portable telephone set for dialling to other telephone sets by abbreviated dialling, wherein:

   said portable telephone set has an operating surface and a side surface which is substantially perpendicular to said operating surface;

   said portable telephone set comprising:

   an abbreviated dial memory for memorizing telephone numbers of said other telephone sets and abbreviated telephone codes corresponding to said telephone numbers as memorized numbers and memorized codes;

   input keys arranged on said operating surface for storing in said memory a plurality of characters representative of destination names as memorized names, said destination names being related to said telephone numbers, said plurality of characters being classified into first and second groups; and

   a shift key arranged on said side surface and coupled to said input keys and having an operated and a nonoperated state for allowing said input keys to store the characters of said first and said second groups in said memory as said memorized names when said shift key is put in one and the other of said operated and said nonoperated states, respectively.

2. A portable telephone set as claimed in Claim 1, wherein:

   said input keys are for storing said telephone numbers in said abbreviated dial memory as said memorized numbers; and wherein:

   said portable telephone set comprises a display unit connected to said memory for displaying a new telephone number and at least one character representative of a new destination name when said input keys are used in storing said new telephone number and said at least one character in said memory as one of said memorized numbers and as one of said memorized names.

3. A portable telephone set as claimed in Claim 2, wherein:

   said input keys are for storing said abbreviated telephone codes in said abbreviated dial memory as said memorized codes; and wherein:

   said display unit is for displaying a new abbreviated telephone code together with said new telephone number and said at least one character when said input keys are used in storing said new abbreviated telephone code in said memory as one of said memorized codes in addition to storage of said new telephone number and said at least one character in said memory.

4. A portable telephone set as claimed in Claim 3, wherein said display unit is for displaying a selected one of said memorized numbers and a selected one of said memorized names when said input keys are used to dial a selected one of said memorized codes that corresponds to said selected one of the memorized numbers.

5. A portable telephone set as claimed in Claim 4, wherein said input keys are ten in number.

6. A portable telephone set as claimed in any one of Claims 1 to 5, wherein the characters of said first group are capital letters, the characters of said second group being lowercase letters.

7. A telephone set comprising:

   housing means having first and second surfaces for accommodating circuitry of said telephone set, said first and said second surfaces being substantially perpendicular to each other;

memory means for storing telephone numbers, names respectively associated therewith, and recall codes corresponding to said telephone numbers, respectively, said names including first and second groups of characters;

input key means disposed on said first surface for inputting telephone numbers, names, and recall codes into said memory means;

shift key means disposed on said second surface and having two states; and

control means connected to said input and shift key means for making the inputted names selectively include one of said first and said second groups of characters in response to the state of said shift key means.

8. A telephone set as claimed in Claim 7, wherein said first group of characters include capital letters.

9. A telephone set as claimed in Claim 7 or 8, wherein said first and said second surfaces comprise front and side surfaces of said housing means, respectively.

10. A telephone set comprising:

housing means having first and second surfaces for accommodating circuitry of said telephone set, said first and said second surfaces being substantially perpendicular to each other;

input key means disposed on said first surface for inputting telephone numbers, names respectively associated therewith, and recall codes corresponding to said telephone numbers, said names including first and second groups of characters;

display means for displaying the inputted telephone numbers, names, and recall codes;

shift key means disposed on said second surface and having two states; and

control means connected to said input and shift key means for making said display means selectively display said first and said second groups of characters representative of the inputted names in response to the state of said shift key means.

11. A telephone set as claimed in Claim 10, further comprising memory means for storing the inputted telephone numbers, names, and recall codes.

12. A method of storing telephone numbers in a telephone set for speed dialling, comprising the steps of:

operating input keys to input telephone numbers, names individually associated with said numbers, and recall codes corresponding to said numbers, respectively, said input keys being disposed on a first surface of a housing accommodating circuitry of said telephone set;

storing the inputted telephone numbers, names, and recall codes;

generating a state signal by operating a shift key disposed on a second surface of said housing; and

responsive to said state signal, making the inputted names include first and second groups of characters.

13. A method as claimed in Claim 12, further comprising the step of:

displaying the inputted telephone numbers, names, and recall codes.

FIG. 1

FIG. 2

FIG. 3

EP 0 469 546 A2

FIG. 4

FIG. 5

EP 0 469 546 A2

FIG. 6

11